# EUROPEAN PATENT SPECIFICATION

(11) **EP 3 202 869 B1**
(45) Date of publication and mention of the grant of the patent: **08.01.2020**
(21) Application number: 15847995.6
(22) Date of filing: 15.07.2015
(51) Int. Cl.: C09J 101/10, A47K 10/16, C09J 11/06, D21H 27/00, D21H 27/30, B32B 7/12, B32B 29/00, C08K 5/053, D21H 27/32, D21H 19/14, D21H 19/34, C09J 101/28

(54) **PLY ADHESIVE AND SANITARY TISSUE PAPER**
LAGENKLEBER UND HYGIENETISSUEPAPIER
ADHÉSIF POUR COUCHE DE PAPIER ET PAPIER HYGIÉNIQUE

(30) Priority: 30.09.2014 JP 2014200608
(43) Date of publication of application: 09.08.2017
(73) Proprietor: Daio Paper Corporation, Ehime 799-0492 (JP)
(72) Inventor: MORIWAKI, Teppei, Fujinomiya-shi Shizuoka 418-0038 (JP)
(74) Representative: Vossius & Partner Patentanwälte Rechtsanwälte mbB
(86) International application number: PCT/JP2015/070247
(87) International publication number: WO 2016/051924

(56) References cited:
- WO-A2-2014/020447
- GB-A- 828 752
- JP-A- H0 940 926
- JP-A- H09 154 764
- JP-A- 2005 261 736
- JP-A- 2009 243 022
- US-A- 2 524 008
- US-A1- 2006 278 357
- US-A1- 2009 126 885
- US-A1- 2010 122 785
- US-B1- 6 342 297

## Description

### Technical Field

The present invention relates
to a sanitary tissue paper produced by ply bonding plural sheets of base paper with a ply adhesive.

### Background Art

As is known, certain types of sanitary tissue paper products such as toilet paper, tissue paper, and kitchen paper are made by integrally laminating plural sheets of base paper. In such sanitary tissue papers, a layer of base paper is often referred to as ply. For example, a sanitary tissue paper is called "two-ply" when it is a laminate of two sheets of base paper, and "three-ply" when three sheets of base paper are laminated. Aside from embossing, an adhesive is used for the integration and lamination of base paper (ply) in these multi-ply sanitary tissue papers.

A sanitary tissue paper produced by integrally laminating sheets of base paper with an adhesive is more advantageous than an embossed tissue paper laminate in that the base paper is less likely to delaminate. A drawback, however, is that portions of the paper with an applied adhesive harden, and make the paper texture poor.

Toilet paper as a variety of sanitary tissue paper is commercially available in the form of a toilet paper roll produced by winding a band of paper around a paper cylinder. A pick-up paste used to bond toilet paper to the paper cylinder, and a tail sealing paste use to seal the tip of the roll in making a toilet paper roll take measures to make peeling of sanitary tissue paper easier, for example, by using an adhesive agent that contains a softening agent to prevent hardening of the adhesive applied portions, or unintended ripping of paper when peeling the tail, or to allow the toilet paper to smoothly separate itself from the paper cylinder. The pick-up paste and the tail sealing paste use carboxymethyl cellulose as the adhesive agent, and the softening agent is an oil such as silicon oil, an alginate such as sodium alginate, or a polyether such as polyethylene oxide.

One may think of using the pick-up paste or tail sealing paste as a ply adhesive to reduce hardening of the paper. However, it is problematic to use traditional pastes such as the pick-up paste as a ply adhesive. Specifically, the ply adhesive, unlike the pick-up paste, is not intended for peeling, and is applied over a certain range of base paper, instead of being locally applied at the either end of a roll. It is accordingly difficult, for example, with an oil-based paste to provide sufficient ply bond strength because such pastes coat the constituent fibers of the base paper, and inhibit hydrogen bonding. A paste mixed with, for example, an alginate cannot be easily applied over a wide range in a uniform fashion because the alginate undergoes gelation. Polyethers such as polyethylene oxide are often used for pick-up pastes. However, because pick-up pastes are intended to bond the paper to a hard paper cylinder, the paste is too sticky to be used as a ply adhesive, and tends to have high viscosity, which makes it difficult to uniformly apply the paste.

PTL 7 relates to a water-based tail tie adhesive for a rolled substrate material and a method of use thereof in the manufacture of rolled substrate material to secure the loose tail end of the roll to the body of the roll.

PTL 8 discloses an adhesive composition comprising an isolated water-soluble protein fraction; and at least 0.1% (w/w) of a protein-bonding agent selected from the group consisting of an anhydride compound, carboxylic acid compound, carboxylate salt compound, and combinations thereof.

PTL 9 relates to a remoistening adhesive, an aqueous solution containing equal proportions of sodium carboxymethylcellulose and polyvinyl alcohol solely as the adhesive ingredients.

### Citation List

### Patent Literature

PTL 1: JP-A-2011-206369
PTL 2: Japanese Patent No. 4619673
PTL 3: Japanese Patent No. 4619671
PTL 4: JP-A-2012-213508
PTL 5: Japanese Patent No. 4420872
PTL 6: JP-A-9-40926
PTL 7: US 6,342,297
PTL 8: WO 2014/020447
PTL 9: US 2,524,008

### Summary of Invention

### Technical Problem

A primary object of the present invention, then, is to provide a ply adhesive of desirable applicability that can be sufficiently used for ply bonding without deteriorating the texture of sanitary tissue paper. The present invention is also intended to provide a sanitary tissue paper having a desirable texture that does not involve ply delamination of base paper layers.

### Solution to Problem

The present invention provided a solution to the foregoing problems, as recited below along with the effects of the invention.

The present invention is as defined in the claims. Meanwhile, the present disclosure may be summarized in the following items 1 and 2.
1. A ply adhesive comprising:
   1 to 5 mass% of carboxymethyl cellulose as an adhesive agent, wherein the carboxymethyl cellulose has a viscosity in a 1 mass% aqueous solution of 100 mPa·s or less; and
   1 to 5 mass% of at least one softening agent selected from propylene glycol, glycerine, and butylene glycol.
2. A multi-ply sanitary tissue paper wherein plural sheets of base paper are integrally laminated by an adhesive,
   wherein the adhesive contains:
      1 to 5 mass% of carboxymethyl cellulose as an adhesive agent, the carboxymethyl cellulose having a viscosity in a 1 mass% aqueous solution of 100 mPa·s or less; and
      1 to 5 mass% of at least one softening agent selected from propylene glycol, glycerine, and butylene glycol, and
   wherein the softening agent is applied in an amount of 1 to 20 mg/m².

### Advantageous Effects of Invention

The present invention provides a
sanitary tissue paper having a desirable texture that does not involve ply delamination of base paper layers.

### Brief Description of Drawings

FIG. 1 is a cross sectional view of a sanitary tissue paper according to an embodiment of the present invention.
FIG. 2 is a diagram explaining an adhesion measurement method.

### Description of Embodiments

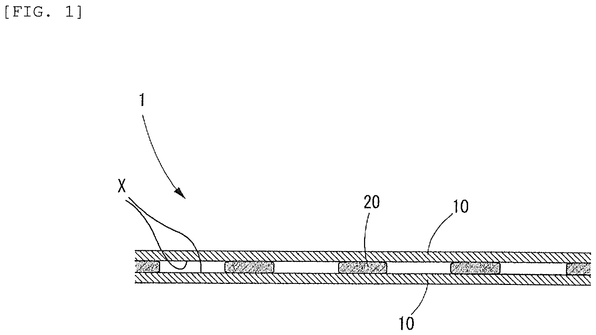

An embodiment of the present invention is described below with reference to FIG. 1.

As illustrated in FIG. 1, a ply adhesive 20
is used to bond sheets of base paper 10 that are laminated to make a sanitary tissue paper 1, which is, for example, toilet paper, kitchen paper, or tissue paper. The ply adhesive 20 is particularly suited for toilet paper among these sanitary tissue papers, and suitably provides the softness needed for toilet paper in wiping fecal material off the skin, and the ply delamination strength needed in such applications. Specifically, the ply adhesive 20 is suited for a water-disintegrable sanitary tissue paper having a basis weight of 12 to 22 g/m² per ply as measured according to JIS P 8124 2011, and a ply thickness of 80 to 140 µm as measured according to JIS P 8118 1998.

A characteristic feature of the ply adhesive used in
the present embodiment is that it contains carboxymethyl cellulose having a viscosity in a 1 mass% aqueous solution of 100 mPa·s as an adhesive agent, and at least one softening agent selected from propylene glycol, glycerine, and butylene glycol.

Carboxymethyl cellulose has good affinity to pulp fibers configured from the constituent cellulose of the base paper, and has the effect to bond the sheets of base paper to each other. Carboxymethyl cellulose is also used as a thickener, and is available in various different viscosities. The present embodiment uses a carboxymethyl cellulose having a viscosity in a 1 mass% aqueous solution of 100 mPa·s as measured according to JIS Z 8803 2011. In this way, desirable applicability to paper surface can be provided while ensuring bondability. The carboxymethyl cellulose with such a viscosity also can sufficiently exhibit its effect without inhibiting the effect of the mixed softening agent.

Propylene glycol, glycerine, and butylene glycol have good affinity to pulp fibers as does carboxymethyl cellulose, and are miscible with the carboxymethyl cellulose dissolved in a common solvent such as water and ethanol. Propylene glycol, glycerine, and butylene glycol also make the pulp fiber flexible, and have hygroscopicity that adds moisture to the base paper. These materials also do not undergo gelation to deteriorate applicability, nor do they coat the pulp fibers to inhibit the function of the adhesive agent carboxymethyl cellulose.

Specifically, the ply adhesive used in the present embodiment contains the adhesive agent in a proportion of 1 to 5 mass%, and the softening agent in a proportion of 1 to 5 mass%. Bondability, and the effect of the softening agent become insufficient when the proportions of the adhesive agent and the softening agent are less than 1 mass%, whereas applicability deteriorates when these are contained in amounts of more than 5 mass% . The selected softening agent moisturizes the bonded portions with its moisture absorbing effect. However, the moisture absorption does not cause an excess loss of adhesion when the adhesive agent used is carboxymethyl cellulose having a viscosity in a 1 mass% aqueous solution of 100 mPa·s or less, and is contained in the foregoing proportion.

As described above, the ply adhesive used in the present embodiment effectively develops the bondability provided by the carboxymethyl cellulose, and the softening and moisturizing effect of the softening agent. Accordingly, portions with the applied ply adhesive do not become hard, and the overall texture of the sanitary tissue paper does not deteriorate.

Another effect of the ply adhesive used in the present embodiment is that the ply adhesive can be sprayed onto the base paper, in addition to providing bondability, flexibility, and moisture retention. Specifically, instead of being sprayed, traditional ply adhesives are applied by using a method that applies a ply adhesive to an embossed portion created in base paper, or a method that prints a ply adhesive pattern using a roll printing apparatus. This is because a traditional ply adhesive had the difficulty in achieving a viscosity range that allows spraying while at the same time satisfying both bondability and flexibility. The ply adhesive used in the present embodiment, with the adhesive agent and the softening agent contained in the specific proportions, does not clog a nozzle even when applied by being sprayed in low viscosity. Unlike application involving embossing or a roll printing apparatus, spray application does not involve pressing of paper surface with a roll or the like, and the sanitary tissue paper can have an improved texture. The appropriate range of the final viscosity of the adhesive used in the present embodiment is 20 mPa·s to 100 mPa·s as measured according to JIS Z 8803 2011. This viscosity range is suited for the spray application of the paste described above. Viscosity can be measured using a viscometer DV-E available from Brook Field. Specifically, the ply adhesive is charged into a beaker placed on a horizontal table, and the viscosity is measured with the spindle of the viscometer fully immersed in the ply adhesive. The measurement is made in a 25°C environment after bringing the subject of measurement to equilibrium at 25°C.

For the production of the ply adhesive used in the present embodiment, carboxymethyl cellulose is first dissolved in a suitable solvent, and propylene glycol, glycerine, and/or butylene glycol are mixed into the carboxymethyl cellulose solution. The solvent may be any appropriate common solvent. Typical examples include water, and lower alcohols such as ethanol.

The ply adhesive used in the present embodiment may contain known additives, such as a pH adjuster, a viscosity adjuster, and a preservative, as appropriate.

A sanitary tissue paper according to the present embodiment using the ply adhesive is described below. The sanitary tissue paper according to the present embodiment is bonded with the ply adhesive that is applied in such an amount that the softening agent contained therein is 1 to 20 mg/m² of bonded surface. As shown in FIG. 1, the bonded surface X represents the mated surfaces of the base paper 10. For example, in a two-ply sanitary tissue paper, the opposing two sheets of base paper represent a single bonded surface. In a three-ply sanitary tissue paper as a laminate of three sheets of base paper, a total of two bonded surfaces are formed by the two sheets of base paper constituting the surfaces, and the base paper sandwiched in between.

The number of laminated base paper layers (the number of ply) in the sanitary tissue paper according to the present embodiment is not limited, and is typically about 2 to 4. Sufficient effects can be obtained when 2 to 4 base paper layers are present.

In the sanitary tissue paper according to the present embodiment, the basis weight of the base paper, and the total thickness of the sanitary tissue paper are not necessarily limited. Desirably, the basis weight is 12 to 22 g/m² per ply, and the total thickness of the sanitary tissue paper is 140 to 400 µm. In this case, the ply adhesive used in the present embodiment can prominently exhibit its effects. The basis weight is the measured value by the basis weight measurement method of JIS P 8124 1998. The paper thickness is measured with a dial thickness gauge (thickness meter) Peacock G (OZAKI MFG Co., Ltd.) under the conditions of JIS P 8111 1998 after the test piece is sufficiently humidified under the same conditions. Specifically, a plunger is lowered to a measurement table after checking for any dirt, dust, or other foreign particles between the plunger and the measurement table, and the dial thickness gauge is set to zero by moving the scale. After lifting the plunger, a sample is placed on the test stage, and the plunger is slowly lowered, and the reading on the gauge is recorded. Here, the plunger simply sits on the sample. The plunger has a metallic terminal with a circular flat surface measuring 10 mm in diameter, and perpendicularly contacts the plane of the paper. The paper thickness is measured under a load of about 70 gf. The paper thickness is the thickness of one-ply paper in the case of one-ply, and the thickness of multi-ply paper in the case of multi-ply. The paper thickness is the mean value of ten measurements.

Application of the ply adhesive in the sanitary tissue paper according to the present embodiment is not particularly limited, and the ply adhesive may be applied by being applied to embossed portions created in the base paper, or by being printed in a pattern using a roll printing apparatus. Preferably, the ply adhesive is applied by being sprayed. As described above, the ply adhesive used in the present embodiment can be applied by being sprayed, and spray application of the ply adhesive prevents compaction of the base paper, and lowering of paper softness. Particularly, spray application can improve softness by preventing hardening of portions bonded with the ply adhesive used in the present embodiment.

In the sanitary tissue paper according to the present embodiment, the area percentage of the ply adhesive may be appropriately adjusted, and the ply adhesive may be applied throughout the paper. The shape of an embossed pattern, and the shape and the size of bonded portions formed by pattern printing of the ply adhesive are subject to design change, as appropriate.

In applying the ply adhesive to the base paper, the ply adhesive may be applied to either surface of a pair of sheets constituting the bonded surface. The ply adhesive may be applied to only one of the surfaces, or to the both surfaces, provided that the ply adhesive is applied in the foregoing amount in terms of a combined amount on these surfaces.

In the sanitary tissue paper according to the present embodiment, the ply adhesive can provide sufficient adhesion (ply delamination strength), and the softening agent contained in the ply adhesive provides moisture to the paper with its moisturizing effect, in addition to preventing hardening of the bonded portions. This makes it possible to provide a multi-ply sanitary tissue paper having a desirable texture, even though the ply adhesive is used.

### Examples

Examples and Comparative Examples of the adhesive used in the present invention were tested and evaluated for bondability, operability, and the paper quality of sanitary tissue paper after application, and the effects were examined.

### Bondability

A 1.5 mass% aqueous solution of carboxymethyl cellulose was prepared with a carboxymethyl cellulose having a viscosity in a 1 mass% aqueous solution of 60 mPa-s. The chemicals shown under the heading "Softening agent" in Table 1 below were mixed into the 1.5 mass% carboxymethyl cellulose aqueous solution in the concentrations shown under the heading "Applied amount of softening agent" to obtain a ply adhesive of Examples and Comparative Examples.

The ply adhesive was used to bond two sheets of base paper, and make a two-ply sanitary tissue paper. Crape paper having a basis weight of 14.5 g/m² was used as the base paper, and the ply adhesive was sprayed over one surface of one of the base sheets in such an amount that the softening agent contained in the ply adhesive had the amount shown in Table 1. The two sheets were laminated immediately after spraying the ply adhesive, and left unattended for 1 day in a 25°C, 50% rh environment to prepare a measurement sample.

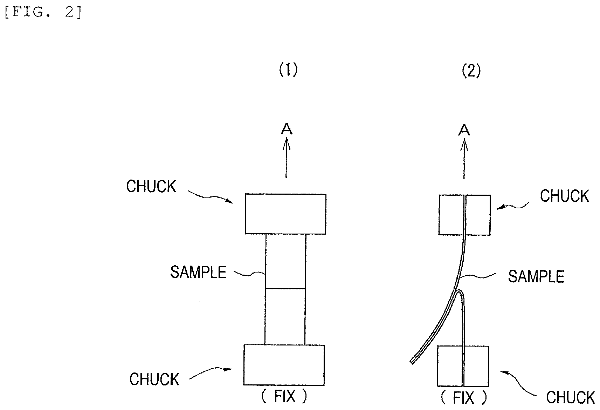

As a test of bondability, a sample cut into a size measuring 20 mm in width (CD direction) and 100 mm in length (MD direction) was peeled from one end of the length over a distance of 30 mm, and 25 mm of each separated end was fixed to a chuck of a tensile tester, as shown in the front view (1) and the side view (2) in FIG. 2. One of the chucks was then pulled over a distance of 50 mm at a rate of 100 mm/min, and the ply delamination strength was measured. The sample was then evaluated using the measured value. The evaluation result was "Good" when the strength was 5 cN or more and less than 20 cN, and "Acceptable" when the strength had an excessively high value of 20 cN or more. Results with a strength of less than 5 cN were "poor".

The abbreviations PG, BG, and PEO under the heading "Softening agent" in Table 1 represent propylene glycol, butylene glycol, and polyethylene oxide, respectively.

### Operability

The ply adhesive of each example was sprayed onto base paper, and the paper was visually inspected to see whether the ply adhesive was uniformly applied to the paper surface. Samples were determined as "Good" when the ply adhesive was uniformly applied, and considered to be usable for spray application, and "Poor" when the paper had nonuniformly applied portions due to, for example, dripping, and was considered to cause problems in the operation of a spray applicator.

**[Table 1]**

| | Examples | | | | | | |
|---|---|---|---|---|---|---|---|
| | Ex. 1 | Ex. 2 | Ex. 3 | Ex. 5 | Ex. 6 | Ex. 8 | Ex. 9 |
| Softening agent | PG | PG | PG | Glycerine | Glycerine | BG | BG |
| Applied amount of softening agent (mg/m²) | 1 | 5 | 10 | 1 | 10 | 1 | 10 |
| Bond strength | Good | Good | Good | Good | Good | Good | Good |
| Operability | Good | Good | Good | Good | Good | Good | Good |

| | Comparative Examples | | | | | | |
|---|---|---|---|---|---|---|---|
| | Com. Ex. 1 | Com. Ex. 2 | Com. Ex. 3 | Com. Ex. 4 | Com. Ex. 5 | Com. Ex. 6 | |
| Softening agent | PG | Glycerine | BG | Silicon oil | Sodium alginate | POE | |
| Applied amount of softening agent (mg/m²) | 30 | 30 | 30 | 1 | 1 | 1 | |
| Bond strength | Poor | Poor | Poor | Poor | Good | Acceptable | |
| Operability | Good | Good | Good | Good | Poor | Poor | |

As shown in Table 1, the results were desirable for both bondability and operability in the Examples of the present invention. On the other hand, the results were not sufficient in at least one of bondability and operability in Comparative Examples.

### Confirmation of Paper Quality

Propylene glycol was mixed into a 1.5 mass% aqueous solution of carboxymethyl cellulose having a viscosity in a 1 mass% aqueous solution of 60 mPa·s in the amounts shown in Table 2 below. The adhesive was sprayed over a surface of base paper having a basis weight of 14.5 g/m² in such an amount that the amount of softening agent per bonded surface was as shown in Table 2. A two-ply sanitary tissue paper was obtained using the same procedure used to make samples for the bondability test. The sanitary tissue paper was used as a sample in a sensory test, in which 64 testers were asked to judge softness and moisture by touching the sample with hand. The test was conducted to measure each sample as being "soft to hard" and "moist to dry" in a bipolar scale of 1 to 7, and the mean value was calculated for evaluation. Each sample was given a score of 1 to 7 from soft and moist to hard and dry. Lower scores mean better evaluation results for each criterion.

**[Table 2]**

| | Example | Comparative Example |
|---|---|---|
| Applied amount of softening agent (mg/m²) | 2.2 | 0.0 |
| Softness | 2.7 | 2.9 |
| Moisture | 3.1 | 3.6 |

As shown in Table 2, softness was more desirable in the Example of the present invention than in Comparative Example. The Example of the present invention was particularly desirable in terms of moisture.

From the results of these tests, it can be said that the ply adhesive , and the sanitary tissue paper using the ply adhesive develop sufficient adhesion (ply delamination strength), and provide a desirable texture that does not involve hardening of the bonded portions.

### Reference Signs List

- 1: Sanitary tissue paper
- 10: Base paper (ply)
- 20: Ply adhesive
- X: Bonded surface

## Claims

1. A multi-ply sanitary tissue paper wherein plural sheets of base paper are integrally laminated by an adhesive, wherein the adhesive, which has a viscosity of 20 mPa·s to 100 mPa·s as measured according to JIS Z 8803 2011, contains:
1 to 5 mass% of carboxymethyl cellulose as an adhesive agent, the carboxymethyl cellulose having a viscosity in a 1 mass% aqueous solution of 100 mPa·s or less as measured according to JIS Z 8803 2011; and
1 to 5 mass% of at least one softening agent selected from propylene glycol, glycerine, and butylene glycol, and
wherein the softening agent is applied in an amount of 1 to 20 mg/m².

## Patentansprüche

1. Ein mehrlagiges Hygienetissuepapier, wobei
mehrere Blätter Basispapier durch einen Klebstoff integral geschichtet sind,
wobei der Klebstoff, der eine Viskosität von 20 mPa·s bis 100 mPa·s aufweist, gemessen gemäß JIS Z 8803 2011, enthält:
1 bis 5 Massen-% Carboxymethylcellulose als Klebemittel, wobei die Carboxymethylcellulose eine Viskosität in einer 1 massenprozentigen wässrigen Lösung von 100 mPa·s oder weniger aufweist, gemessen gemäß JIS Z 8803 2011; und
1 bis 5 Massen-% mindestens eines Weichmachers, ausgewählt aus Propylenglykol, Glycerin und Butylenglykol, und
wobei der Weichmacher in einer Menge von 1 bis 20 mg/m² aufgebracht wird.

## Revendications

1. Papier hygiénique multicouche dans lequel plusieurs feuilles de papier de base sont intégralement stratifiées au moyen d'un adhésif, dans lequel l'adhésif, qui a une viscosité de 20 mPa.s à 100 mPa.s telle que mesurée conformément à la norme JIS Z 8803 2011, contient :
1 à 5 % en masse de carboxyméthylcellulose en tant qu'agent adhésif, la carboxyméthylcellulose ayant une viscosité en solution aqueuse à 1 % en masse de 100 mPa.s ou moins telle que mesurée conformément à la norme JIS Z 8803 2011 ; et
1 à 5 % en masse d'au moins un agent adoucissant choisi parmi le propylèneglycol, le glycérol et le butylèneglycol, et
dans lequel l'agent adoucissant est appliqué en une quantité de 1 à 20 mg/m².
